# EUROPEAN PATENT APPLICATION

(11) **EP 0 856 543 A1**
(43) Date of publication of application: **05.08.1998**
(21) Application number: 97200241.4
(22) Date of filing: 31.01.1997
(51) Int. Cl.: C08G 81/02, C08G 77/442, C08F 283/12

(54) **Use of an olefin polymer as a coating and coated product comprising a coating of an olefin polymer**

(71) Applicant: DSM N.V., 6411 TE Heerlen (NL)
(72) Inventor: Rauch, Theodoor Wilhelm Leonard, 6063 AN Roerdalen (NL); Repin, Johannes Fredericus, 6441 KX Brunssum (NL); Bruls, Wilhelmus Gerardus Marie, 6243 BE Meerssen (NL); Janssen, Koen Jan Gerarda, 3740 Bilzen (BE) (BE); Van Der Sanden, Marcellus Cornelis Maria, 6137 LL Sittard (NL)

(57) **Abstract**

Use of an olefin polymer for coating, wherein the olefin polymer is a branched polyolefin in the form of a comb and structural equivalents thereof comprising a plurality of polyolefin arms linked to a polymer backbone, said backbone having repeating units containing a group selected from the group consisting of aliphatic groups, aromatic groups, heteroatom-containing groups and combinations thereof, wherein the branched polyolefin is prepared:
(a) by coupling a polyolefin pre-arm with a reactive polymeric backbone; or
(b) by polymerization of a polyolefin pre-arm.

## Description

The invention relates to the use of an olefin polymer as a coating.

At the moment low-density polyethylene (LDPE) is the olefin polymer that is most used as a coating on a substrate. Other types of polyethylene, such as high-density polyethylene (HDPE) and linear-low-density polyethylene (LLDPE) and other olefin polymers, such as polypropylene (PP), do not possess the physical (and chemical) properties that make them suitable for coating and are therefore rarely used.

Goal of the present invention is the use of various specific olefin polymers for coating of a substrate.

The invention is residing in the use, as a coating, of a branched polyolefin in the form of a comb and structural equivalents thereof comprising a plurality of polyolefin arms linked to a polymer backbone, said backbone having repeating units containing a group selected from the group consisting of aliphatic groups, aromatic groups, heteroatom-containing groups and combinations thereof, wherein the branched polyolefin is prepared:
(a) by coupling a polyolefin pre-arm with a reactive polymeric backbone; or by
(b) polymerization of a polyolefin pre-arm.

In this way it is achieved that an olefin polymer with essentially the same physical properties as the polyolefin that forms the pre-arm can be used for coating a substrate.

Another advantage of the use of the branched olefin polymer according to the invention as a coating is that the fixation of the branched olefin on the substrate is very good.

A further advantage of the use of the above-mentioned branched olefin polymers is that during extrusion coating the neck-in of the branched olefin polymer is equal to or less than for LDPE, when coating with the branched olefin polymer is compared with a LDPE with equal melt flow index (MFI).

The branched olefin polymer that is used has the form of a comb or structural equivalents thereof, whereby a plurality of polyolefin arms are linked to a polymeric backbone to provide a branched structure in which the properties of the branched structure can be conveniently tailored. Concepts of the branched olefin polymer rely on chemical reactions which afford the coupling or linking together of polyolefin pre-arms into combs or structural equivalents thereof. Branched polymers result from either a coupling reaction between a reactive polymeric backbone containing functionality capable of reaction with a polyolefin pre-arm or a polymerization reaction between polyolefin pre-arms derivatized for such polymerization reactions. By polyolefin pre-arm is meant a polyolefin polymer derivatized, preferably at its terminus, so that it can react with a functional polymer or a difunctional polymerizable monomer. Use of a polyolefin pre-arm allows for control of the branched polyolefin independently of the reaction to form the branched polyolefin.

Reactive polymers useful as backbones are preformed polymers with a selectable number of functional groups or chemically reactive sites that will couple with the polyolefin pre-arm. Alternatively, the backbone is formed by a polymerization reaction using a polyolefin pre-arm first derivatized with a difunctional polymerizable monomer, either alone or in combination with another monomer copolymerizable therewith. Selective use of the polymeric backbone allows one to control the distribution of the polyolefin arms, thus controlling the degree of branching (number of arms). Polymeric backbones are preformed polymers having a known or selectable number of functional groups or chemically reactive sites that can be used to couple with the polyolefin pre-arm. Reactive polymeric structures useful as backbones are polymers possessing functionality which is either (a) capable of directly reacting with unsaturation contained in a polyolefin pre-arm or (b) capable of undergoing coupling reactions with polyolefin pre-arms that have been derivatized for a compatible reaction with the functional group on the reactive polymeric backbone. The reactive polymers provide a large number of coupling sites by which a large number of polyolefin pre-arms can be linked to the polymeric backbone to thus enable control of both the extent of branching and the type of branched structure.

Branched polymers used in the present invention have polyolefin arms or branches comprised of polymers of 1-alkenes, and preferably predominately ethylene and/or other 1-alkenes with 3 to 20 carbon atoms. By the term "polyolefin pre-arm" is meant a polyolefin polymer derivatized, preferably at its terminus, so that it can react with a reactive polymeric backbone or a difunctional polymerizable monomer. Derivatized as used herein likewise includes polyolefin polymers having (terminal) unsaturation, that is, the polymer contains a carbon-to-carbon double bound, C = C. The polyolefin pre-arm preferably contains, prior to derivatization or coupling with a reactive polymer or a difunctional polymerizable monomer, terminal unsaturation. That unsaturation is either vinyl, vinylidene, or vinylene unsaturation. Terminal unsaturation is preferred in order to reduce the steric effects resulting from reaction between two polymeric molecules. Where ever in the following the text refers to "terminal", the same teaching holds for polyolefin pre-arms, which have a functionality in the polymeric main chain, or in a (monomeric or polymeric) side chain.

Polyolefin pre-arms can be derivatized for reaction with a reactive polymeric backbone or a difunctional monomer by many types of chemical reactions. Convenient examples of functional groups introduced to the polyolefin pre-arm to effect coupling include, but are not limited to carbon-to-carbon unsaturation in the form of vinyl, vinylidene and vinylene bonds, hydroxy, amino, peroxy, carboxylic acid, ester, halide, anhydride, organoboron, cyano, isocyanato, carbon-carbon unsaturation that is polymerizable, thio, epoxy or aldehyde. Such derivatization methods will be presented in more detail as specific embodiments are defined.

Reactive polymer structures useful as backbones in the practice of this invention are very broad. Examples include, but are not limited to the following classes: homo and copolymers of polyhydrosilanes, polyacrylic and methacrylic acids, polyacrylates, polymethacrylates, polyvinyl alcohol, polyvinyl acetate, poly(vinyl acetals), poly(vinyl ketals), ethylene copolymers with ethylenically unsaturated carboxylic acids, esters, or anhydrides, styrene copolymers with ethylenically unsaturated carboxylic acids, esters, or anhydrides, polythiols, polyepoxides, poly or extended isocyanates.

Use of a preformed reactive polymer as the backbone generally leads to a branched structure characterizable basically as a comb depending to a significant degree on the molecular weight of the reactive polymeric backbone and the polyolefin pre-arms. Comb branched polymers are those wherein the polymeric backbone is essentially linear and the polyolefin arms extend pendant from that linear backbone. Thus, polyhydrosilanes, polymethacrylates, and ethylene copolymers are typical examples of reactive polymeric backbones that will provide a comb structure.

In an alternative embodiment, the polymeric backbone is formed via a polymerization reaction between polymerizable monomers and polyolefin pre-arms that have been first derivatized with a difunctional polymerizable monomer leaving a polymerizable group capable of undergoing such polymerization reactions. The difunctional polymerizable monomer as used herein is a monomer possessing functionality that can selectively react with the terminal unsaturation or other terminal functionality of the polyolefin pre-arm, and possess other secondary functionality, reactive via a standard polymerization techniques such as cationic, anionic, free radical, Ziegler-Natta, etc., as a secondary reaction. Difunctional polymerizable monomers can be selected from the group comprising hydroalkoxysilanes, hydrohalosilanes, acrylic or methacrylic acids, their esters, amides, acid halides or anhydrides, vinyl acetate, vinyl alcohols, vinyl amines, vinylcyano compounds, vinyl isocyanates, vinyl thiols, vinyl epoxy compounds, etc.

The polyolefin pre-arms which can be used depend in large measure on the properties desired in the branched polymer. It is generally preferred, that the polyolefin pre-arm be formed of a polyolefin containing terminal unsaturation in the form of either vinyl, vinylidene, vinylene, or mixtures thereof. Use can be made of polyolefin homopolymers, such as polyethylene and polypropylene, but it is also possible, and sometimes preferred, to employ copolymers of one or more 1-alkenes or to employ copolymers of one or more 1-alkenes with other unsaturated monomers copolymerizable therewith. In general, use is made of polyolefin pre-arms formed by copolymerization of ethylene with at least one other 1-alkene. In addition, it is also possible to use, in combination with one or more of the monomers described above, one or more polyenes which either may or may not be functionalized. Also suitable as comonomers in the formation of the polyolefin pre-arms are functionalized ethylenically unsaturated monomers in which the functional group may be one or more polar groups capable of undergoing metallocene catalyzed polymerization.

The polyolefin pre-arms refer to and include polymers of 1-alkenes generally, and preferably ethylene/ propylene copolymers or copolymers of ethylene and propylene with other 1-alkenes, as well as copolymers formed by the interpolymerization of ethylene, 1-alkenes and at least one other polyene monomer. Such polymers are themselves well known to those skilled in the art and are typically prepared by using conventional Ziegler or metallocene polymerization techniques well known to those skilled in the art. Both types of polymers hereinafter collectively are referred to as EP(D)M.

As will be appreciated by those skilled in the art, while propylene is a preferred monomer for copolymerization with ethylene and optionally a diene monomer, it will be understood that in place of propylene, use can be made of other 1-alkenes containing 4 to 20 carbon atoms. The use of such higher 1-alkenes together with or in place of propylene are well known to those skilled in the art and include, particularly, 1-butene, 1-pentene, 1-hexene and 1-octene.

When using an interpolymer of ethylene, 1-alkene and a polyene monomer, use can be made of a variety of polyene monomers known to those skilled in the art containing two or more carbon-to-carbon double bonds containing 4 to 20 carbon atoms, including non-cyclic polyene monomers, monocyclic polyene monomers and polycyclic polyene monomers. Representative of such compounds include 1,4-hexadiene, dicyclopentadiene, bicyclo(2,2,1)hepta-2,5-diene, commonly known as norbornadiene, as well as the alkenyl norbornenes wherein the alkenyl group contains 1 to 20 carbon atoms and preferably 1 to 12 carbon atoms. Examples of some of the latter compounds includes 5-methylene-2-norbornene, 5-ethylidene-2-norbornene, vinyl norbornene as well as alkyl norbornadienes.

As known to those skilled in the art, it is also possible to include with certain Ziegler-Natta catalyst systems, as a comonomer in the polymerization of the polyolefin pre-arm, a small amount, typically up to 10 percent, of a functional ethylenically unsaturated monomer. Such monomers typically contain 2 to 20 carbon atoms and contain an ethylenically unsaturated group. Preferred functional ethylenically unsaturated monomers include acrylate and methacrylate esters wherein the ester restgroup is C₁ to C₂₀ alkyl or C₆ to C₂₅ aryl including substituted aryl, vinylcyano compounds and vinyl esters. Representative of suitable functional monomers which can be used in the practice of the present invention include methylmethacrylate, methylacrylate, N-vinylpyridine, acrylonitril, vinyl acetate, etc.

The polyolefin pre-arm can also be produced using metallocene catalysts. As used herein, the term "metallocene catalyst system" refers to and includes the use of a transition metal compound comprising a metal from groups 3-6 of the Periodic Table, such as titanium, zirconium, chromium, hafnium, yttrium containing at least one coordinating ligand that is a highly conjugated organic compound (e.g., cyclopentadienyl or indenyl). Such catalyst systems are themselves known and are described in the following published applications, the disclosures of which are incorporated herein by reference: EP-A-347,129; EP-A-69,951; EP-A-468,537; EP-A-500,944; and PCT/NL/93/00229.

In addition, other Ziegler catalyst systems likewise known in the art as producing terminal unsaturation can likewise be used. One such example is titanium chloride supported on magnesium chloride and used in high temperature (greater than 100°C) polymerization systems. Another example is the copolymerization of ethylene with higher 1-alkenes using VOCl₃ and diethylaluminum chloride. In general, the choice of catalyst system and polymerization conditions will depend on the specific type of polyolefin pre-arm desired, as known to those skilled in the art of Ziegler-Natta polymerization technology. Thus, the composition of the pre-arms are dependent on the limits of Ziegler-Natta polymerization technology and can be controlled independent of the composition of the backbone.

Because it is possible to introduce in a controlling fashion large numbers of polyolefin pre-arms, the properties of the polyolefin arms linked to the polymeric backbone dominate the properties of the resulting branched polymer. Thus, the molecular weight of the polyolefin pre-arms can be varied to control the properties desired in the overall branched polymer. Similarly, the method of preparation of the pre-arms can be used to, in part, control the properties of the arms. In general, the lengths of the pre-arms, expressed as the number-average molecular weight, Mₙ, can be varied within broad limits, depending on the properties desired. As a general rule, use is made of polymer pre-arms having a Mₙ between 300 and 2,000,000 g/mol, and preferably between 600 and 500,000 g/mol. It is generally preferred that the molecular weight distribution (MWD) of the arms be controlled to a level of at least 1.0, referring to the ratio between the weight-average molecular weight (M_{w}) and the number-average molecular weight (Mₙ), as determined by size exclusion chromatograph-differential viscometry (SEC-DV). Preferred pre-arms used in the practice of the present invention have a MWD of at least 1.2 ranging up to 3.5.

The chemical reactions employed to couple the polyolefin pre-arm with the reactive polymer are generally known. Reaction times will generally be much longer for the production of the branched polyolefins than that practiced for the same chemical reaction with conventional monomeric chemicals. As will be appreciated by those skilled in the art, as the molecular weight of the polyolefin pre-arm to be coupled with the backbone increases the number of (terminal) double bonds in the polyolefin pre-arm decreases on a weight basis. That in turn results in a reduction of the coupling efficiency of the polyolefin pre-arms to the polymeric backbone. Thus, longer reaction times are required to produce the branched polymer. Similarly, steric factors can play a role in reducing the coupling efficiency, making it more difficult to couple the polyolefin pre-arm to adjacent functional groups in the backbone. In short, the greater the molecular weight of the polyolefin pre-arm to be coupled with the backbone, the greater is the reaction time in effecting that coupling and the less complete is the substitution of the polyolefin pre-arm on the functional groups of the backbone.

The number, in the backbone, of repeating units with functionality capable of being coupled to a plurality of polyolefin pre-arms depends to some degree, also on the intended application of the polymer. As a general rule, it is preferred that the reactive polymeric backbone contains at least 10 functional groups through which polyolefin arms can be linked to form a highly branched structure. It is often desirable to employ a reactive polymeric backbone having the capability of forming at least 4 to 300 polyolefin arms linked to the polymeric backbone.

While it is generally preferred, as indicated above, that the reactive polymer backbones contain at least 10 functional groups through which the polyolefin pre-arms can be coupled, it is necessary that the reactive polymeric backbone contains at least ten functional groups. That is so because the reaction to couple the polyolefin pre-arm to the reactive polymeric backbone is not quantitative with respect to utilization of backbone functionality. As explained above, the molecular weight of the polyolefin pre-arm can reduce the coupling efficiency of high molecular weight polyolefin pre-arms to the reactive polymeric backbone; that effect is often reinforced by steric factors associated with the coupling site on the reactive polymeric backbone and can prevent, with molecular weight polyolefin pre-arms the coupling of polyolefin pre-arms to immediately adjacent functional groups in the polymeric backbone.

The choice of reactive polymeric backbone and specific functionalized polyolefin pre-arms is dependent on the intended use of the branched polymer. Pre-arms and reactive polymeric backbones are chosen so that the chemical bond coupling them will be stable under the conditions of intended use.

One suitable and preferred class of polymeric backbones are polyhydrosilane polymers and copolymers containing a large number of repeating units containing a silicon-hydrogen bond. In general, it is preferred to use silicon-containing polymers having repeating units of the general formula: 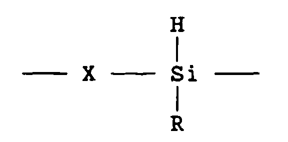 wherein X is a group containing a heteroatom, such as P, O, S, N, Si or one or more carbon atoms either as part of an aliphatic or aromatic group and R is hydrogen or an organic group, and preferably hydrogen, alkyl, aryl, cycloalkyl, alkoxy, aryloxy or cycloalkoxy.

Illustrative are polyhydrosiloxanes derived from an alkylhydrosiloxane end-capped with either a hydrosilane functionality or an alkylsilane functionality. Such polyhydrosiloxanes have the general formula: 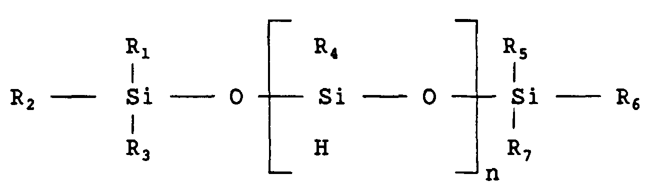 wherein R₁ to R₇ is each independently hydrogen or an organic group; preferably, R₁, R₂ and R₃ can be either hydrogen, alkyl, aryl, cycloalkyl, alkoxy, aryloxy or cycloalkoxy; R₄ is hydrogen, alkyl, aryl, cycloalkyl, alkoxy, aryloxy or cycloalkoxy; R₅ and R₆ are alkyl, aryl, cycloalkyl, alkoxy, aryloxy or cycloalkoxy and R₇ is hydrogen, alkyl, aryl, cycloalkyl, alkoxy, aryloxy or cycloalkoxy; n is an integer having a minimum value of about 10, and preferably 25 or higher. Such polyhydrosiloxanes, as is well-known to those skilled in the art, are commonly available from a number of companies including Dow Corning and Rhone Poulenc. As will also be appreciated by those skilled in the art, it is likewise possible to employ in place of the polyhydrosiloxanes described above, the corresponding analogs thereof in which at least part of the oxygen atoms is replaced by sulfur or nitrogen atoms.

Representative of suitable polyhydrosilane polymers are polymethylhydrosilane, polymethylhydrosiloxane (PMHS), methylhydrodimethylsiloxane copolymer, methylhydrophenyl-methylsiloxane copolymer, methylhydrocyanopropylsiloxane copolymer, methylhydromethyloctylsiloxane copolymer, poly(1,2-dimethylhydrosilazane), (1-methylhydrosilazane)(1,2-dimethylhydrosilazane) copolymer and methylhydrocyclosiloxane polymer (a cyclic reactive polymeric backbone).

In general, use is made of silicon-containing polymer backbone having a number average molecular weight of 300 g/mol or higher, and preferably 300 to 10,000 g/mol.

In accordance with a preferred embodiment the pre-arms can be linked to the silicon-containing reactive polymeric backbone described above by reacting its (terminal) unsaturation with the Si-H bond present in repeating units in the polyhydrosilane backbone. As is well known to those skilled in the art, the reaction between the (terminal) unsaturation of the pre-arms and the Si-H bond of the polyhydrosilane can be carried out under conditions of heat. It is generally preferred to carry out the reaction (hydrosilylation) under the influence of a suitable catalyst to effect addition of the silicon hydride to the (terminal) unsaturation of the olefin pre-arm to link the arm to the silicon-containing reactive polymeric backbone. Suitable hydrosilylation catalysts to effect that reaction are known in the art and include metals from groups 8 to 10 of the Periodic Table of the Elements, (see: Handbook of Chemistry and Physics 70th edition, CRC press, 1989-90), including catalysts based on palladium, platinum or nickel. Catalysts which have been found to be particularly effective are H₂PtCl₆·xH₂O(x≥O), K[Pt(C₂H₄)Cl₃], RhCl(PPh₃)₃ or Co₂(CO)₈. Such catalysts are described in the literature such as USP-5,486,637.

The hydrosilylation reaction can be carried out in accordance with a variety of reaction conditions as described in the art. It is generally possible, and sometimes desirable, to carry out the reaction in the presence of a solvent such as aliphatic hydrocarbons (such as pentane, hexane, heptane, pentamethylheptane or distillation fractions); aromatic hydrocarbons (such as benzene or toluene); halogenated derivatives of aliphatic or aromatic hydrocarbons (such as tetrachloroethylene) or ethers (such as tetrahydrofuran or dioxane). The relative propercies of the pre-arm and the polyhydrosilane are controlled to ensure that the desired number of polyolefin pre-arms become linked by the addition reaction to the polymeric backbone. The solution reaction is generally carried out at a concentration of 2 to 50 weight percent of polymeric reactant. The polymeric reactants are ratioed according to the moles of (terminal) unsaturation (C=C) in the polyolefin pre-arm to the moles of Si-H bonds in the polyhydrosilane. Because the coupling of polyolefin pre-arms to the hydrosilane groups present in the backbone controls the number of arms linked to the backbone, a molar excess of polyolefin pre-arms ensures the maximum number of polyolefin arms linked to the polymer backbone, when maximum branching is desired. In general, mole ratios ranging from 1:100 to 10:1 of the polyolefin pre-arms per mole of hydrosilane group is employed.

The reaction temperature is not a critical variable, and depends somewhat on the reactants used in carrying out the coupling reaction. Generally, temperatures ranging from 15 to 300°C can be used for that purpose. Similarly, the reaction time is likewise not critical and depends on the reactants employed. As a general rule, reaction times are those sufficient to couple the polyolefin pre-arm to the polymer backbone, and generally range from 10 seconds up to 300 hours.

As will be appreciated by those skilled in the art, the foregoing reaction generates a mixture of products, depending on the structure of the polymer backbone and the structure of the polyolefin pre-arm. Nonetheless, one of the principal reactions which proceeds is the addition of the hydrosilane group to the (terminal) unsaturation of the polyolefin pre-arm. For example, those pre-arms containing terminal vinylidene unsaturation react according to the following equation: 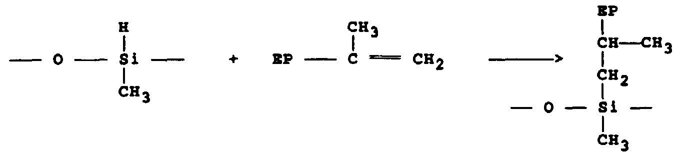 while the reaction with a terminal vinyl unsaturation proceeds according to the following equation: 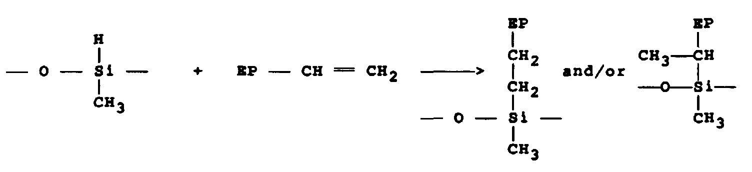 wherein EP represents the remainder of the polyolefin pre-arm.

In accordance with one variation on this embodiment of the invention, it is also possible to produce polymers of the same type by a different route in which the polyolefin pre-arm is reacted with a difunctional polymerizable monomer in the form of a monomeric hydrosilane compound containing a Si-H group, which is then either homopolymerized or copolymerized with other silicon-containing compounds in a conventional manner. This involves the coupling of a polyolefin pre-arm with a monomeric hydrosilane having the structure: 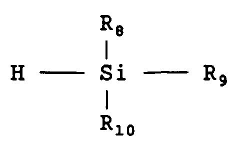 wherein R₈ and R₉ are each a hydrolyzable group such as a halogen atom and preferably chlorine or a lower alkoxy group containing 1 to 6 carbon atoms and R₁₀ is a hydrolyzable group as described above or hydrogen, alkyl, aryl or cycloalkyl.

Thus, the reaction, when the polyolefin pre-arm contains vinylidene terminal unsaturation, proceeds as follows: 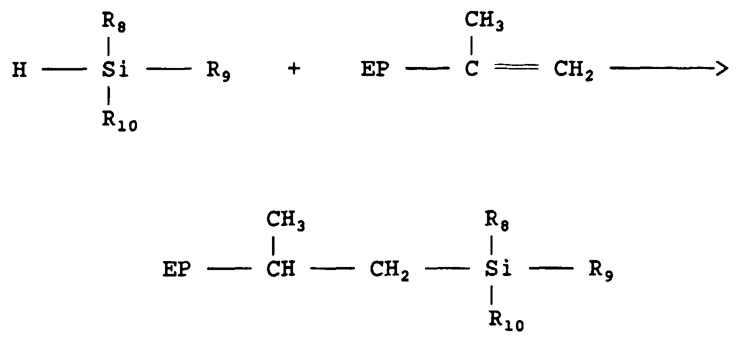 The resulting silane-terminated polyolefin can then be reacted, typically in the presence of water, to homopolymerize the silane and form the corresponding branched polymer containing polyolefin arms and a silane polymer backbone. It should be understood, however, that it is possible, and sometimes desirable, to utilize silanes different from that with which the polyolefin pre-arm is coupled which then can be copolymerized to form a polysilane backbone structure, having a random distribution of polyolefin arms emanating therefrom.

It is also possible to copolymerize, with the polyolefin-substituted silane, other hydrolyzable silanes to form a silane copolymer backbone, the units of which contain polyolefin arms emanating therefrom along with repeating units from the other hydrolyzable silanes which have been copolymerized therewith. For example, it is possible to copolymerize a silane-substituted polyolefin illustrated above with, for example, dimethyldichlorosilane in which some of the repeating units of the polymer backbone contain polyolefin arms emanating therefrom while others derived from the dimethyldichlorosilane contain methyl groups appended to the silicon atom.

The conditions under which the polyolefin pre-arm is reacted with the hydrosilane monomer are like those described above for reaction between the polyolefin pre-arm and the polyhydrosilane.

It is also possible to utilize other chemical reactions or coupling techniques to link the polyolefin pre-arm to a reactive polymer. In accordance with one embodiment, it is possible to employ, as the reactive polymeric backbone, polymers of acrylic and methacrylic acid either as a homopolymer or copolymerized with other acrylic and/or methacrylic type monomers. The acrylic and methacrylic polymers used in this embodiment of the invention are those derived from the monomers unit having the structure: 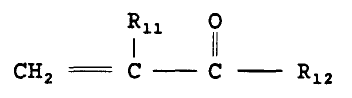 wherein R₁₁ is either hydrogen or lower alkyl (C₁-C₁₂, e.g., methyl) and R₁₂ is an OH group, a halogen group and preferably chlorine, an alkoxy group, or an aryloxy group. Representative of such compounds include acrylic acid, methacrylic acid, acrylyl chloride and methacrylyl chloride along with various esters of either acrylic or methacrylic acid including the alkyl and aryl ester derivatives of the two acids. As a comonomer, use can be made of amino or hydroxyalkyl acrylates and methacrylates. It is sometimes desirable to employ, when using the ester, an ester leaving group to facilitate transesterification with a functionalized polyolefin pre-arm as will be described more fully hereinafter. Suitable ester-leaving groups are well known to those skilled in the art, and include tosylates and mesylates as examples.

The polyacrylic or polymethacrylic backbone should have a molecular weight sufficient to provide at least 10 and preferably at least 25 acid, acid chloride or ester groups in each backbone polymer chain. Such polymers have molecular weights Mₙ typically ranging from 1,000 to 40,000 g/mol.

The coupling of the polyolefin pre-arm to the acid, acid chloride or ester functionality of the reactive polymeric backbone can be achieved by first functionalizing the polyolefin pre-arm prepared as described above to introduce either a terminal amine group or a terminal hydroxy group, each of which is capable of undergoing reaction with the functional group contained in the polyacrylic or polymethacrylic backbone. Preferably, the hydroxy terminal polyolefin pre-arm is converted to a lithium alkoxide by reaction with n-butyllithium, followed by reaction with acrylyl chloride or methacrylyl chloride.

One such technique for converting the terminal unsaturation of the polyolefin pre-arm to either an amine or a hydroxy compound is by hydroboration. In that technique, a hydroboration reagent is added across the terminal double bond of the polyolefin pre-arm to form an organoborane derivative which can then be converted to the corresponding hydroxy compound using alkaline hydrogen peroxide or to the corresponding amine using ammonium hydroxide/NaCi. Those reactions can be illustrated by means of the following equation: 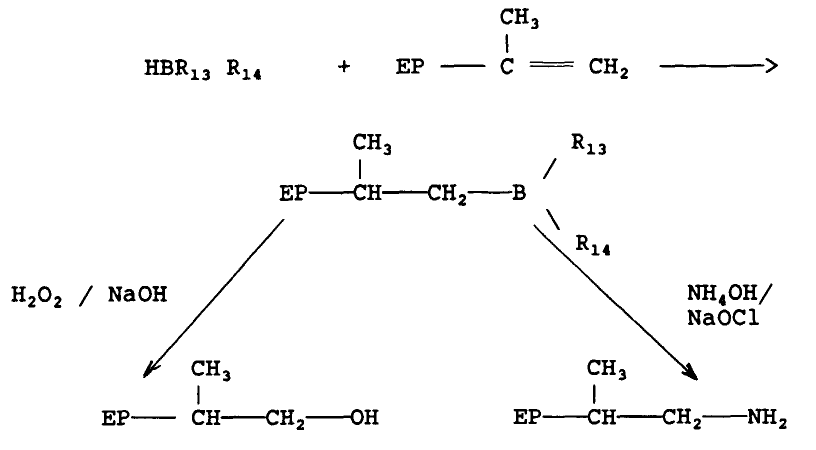 wherein R₁₃ and R₁₄ are each hydrogen and/or organic groups bonded to the boron in the hydroboration reagent. A number of such hydroboration agents are well known to those skilled in the art and can be found and their utility described in H.C. Brown, "Organic Synthesis Via Boranes" Wiley 1975. One such hydroboration reagent which can be effectively used in the practice of the present invention is 9-boronbicyclo[3.3.1]nonane [9-BBN].

Once converted to the corresponding hydroxy or amine terminated polyolefin pre-arm, this pre-arm can then be reacted with the polyacrylic or polymethacrylic backbone in accordance with conventional techniques by which the functional group of the reactive polymer, a carboxylic acid group, an acid chloride group or an ester group reacts with the polyolefin pre-arm in the form of a hydroxy terminated compound to form the corresponding ester polyolefin arms linked to the acrylic or methacrylic polymer backbone. Similarly, the same functional groups react with an amine terminated polyolefin pre-arm to form the corresponding amide, thereby linking the polyolefin arm to the polymer backbone. Conventional esterification and amidation reaction conditions, generally in solvent, may be used to effect that coupling reaction.

Instead of using, as the polymer backbone, homopolymers of acrylic or methacrylic acid, acid chlorides or esters, use can be made of copolymers of the foregoing acrylic or methacrylic acids, acid chlorides or acid esters. Such copolymers are formed from one or more polymerizable ethylenically unsaturated monomers capable of undergoing an anionic or free radical polymerization. Preferred among comonomers with such acrylic and methacrylic monomers as described above are ethylene and lower 1-alkene such as propylene and 1-butene, styrene and styrene derivatives such as alpha methylstyrene, vinyl ethers and vinyl cyano compounds such as acrylonitrile and methacrylonitrile. Other comonomers useful in the practice of this invention as copolymerizable with the acrylate and methacrylate monomers include unsaturated diacids, diesters, anhydrides such as fumaric, itaconic, maleic, a broad range of vinyl monomers such as vinyl acetate, vinyl imidizole, vinyl pyridine, methyl vinyl ketone, allyl glycidyl ether, and acrylamide. The amount of one or more of the foregoing comonomers is not critical and can be varied within relatively wide ranges. In general, use can be made of 20 to 80 percent of the acrylic or methacrylic monomer and 80 to 20 percent of one or more of the foregoing comonomers. Once again, it is preferred to employ, as the polymer backbone, copolymers having molecular weights (Mₙ) ranging from 1,000 to 40,000 g/mol.

As will be appreciated by those skilled in the art, the polyolefin pre-arm can be coupled to such copolymers in the same manner as they are coupled to the acrylic and methacrylic homopolymers as described above. In either case, use is made of a molar ratio of the functionalized polyolefin pre-arm to acid, acid chloride or ester functionality or the reactive polymeric backbone to ensure the desired number of arms coupled to the backbone; this ratio is in the range of 1:100 to 10:1.

Branched polymers of the foregoing types can also be prepared by the alternate route in which a terminal amine, hydroxy, or lithium alkoxy functional polyolefin pre-arm is first reacted with a difunctional polymerizable monomer. In this embodiment, it is convenient to use an acrylic or methacrylic monomer to couple the polyolefin pre-arm through either an ester or amide coupling linkage. Once coupling of the polyolefin pre-arm is accomplished, the resulting coupled monomer can then be subjected to conventional free radical or anionic polymerization either alone or in combination with one of the foregoing comonomers to form the corresponding polymers with polyolefin arms emanating from the repeating units derived from the acrylic or methacrylic monomer. Once again, the reaction techniques for effecting that polymerization reaction are conventional and can be found in the literature describing conditions to effect free radical and anionic polymerization of acrylic and methacrylic monomers. See, for example, the Encyclopedia Of Polymer Science & Engineering, (1988), John Wiley & Sons, Inc., Vol. 13, pp. 1702-1867 and Vol. 1, pp. 221-224, 235-251 (Bamford).

Use can also be made of a reactive polymer in the form of copolymers of maleic anhydride and ethylene or copolymers of maleic anhydride, ethylene and one or more of a lower alpha-olefins such as propylene and 1-butene or styrene. In accordance herewith use can be made of copolymers containing 85 percent to 95 percent of ethylene and 15 percent to 5 percent of maleic anhydride. The polyolefin pre-arms, which have been functionalized to introduce either a hydroxy or an amine group can thus be coupled to the ethylene/maleic anhydride copolymer by means of ester and/or amide linkages. Alternatively, when using polyolefins functionalized with an amine, it is also possible to couple the polyolefin pre-arm to the ethylene maleic/anhydride copolymer backbone by means of imide linkages. The reaction of an amine-functionalized polyolefin pre-arm with an ethylene/maleic anhydride copolymer to form the corresponding imide may be represented by the following equation: 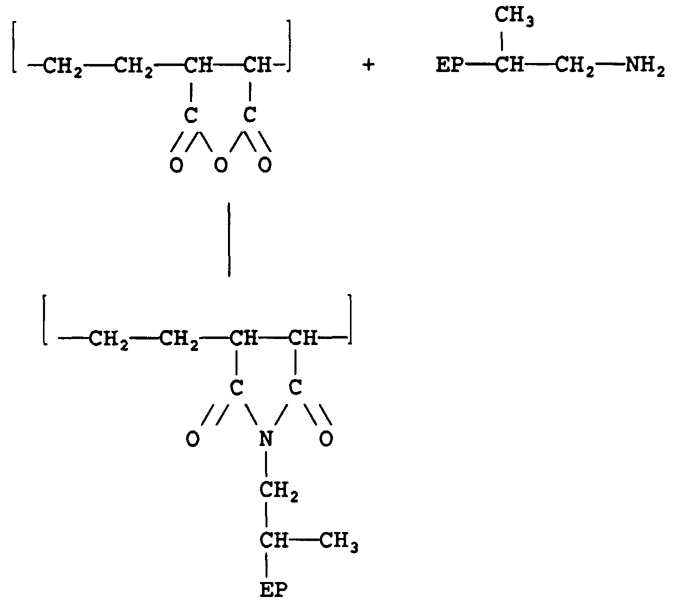 Once again, the reaction conditions for coupling hydroxy or amine functionalized polyolefin pre-arms are conventional.

As an alternative to the ethylene/maleic anhydride copolymers, use can also be made of the styrene/maleic anhydride copolymers, referred to as SMA polymers. Included as SMA polymers are those where the styrene in part may be substituted by other aryl olefins such as α-methyl styrene, vinyl naphthalene, alkyl styrenes, vinyl alkyl naphthalenes, halogen substituted styrenes, etc. In accordance herewith use can be made of copolymers containing 90 to 65 weight percent of styrene and 35 to 10 weight percent of maleic anhydride. Additionally, 5 to 15 weight percent of the maleic anhydride may be prereacted with simple amines such as ammonia, aniline, N-alkyl amines, alkyl substituted anilines to form the corresponding maleimide group in the SMA polymer. The SMA polymers useful in the practice of this invention can have a Mₙ of 500 to 55,000 g/mol. Polyolefin pre-arms, which have been functionalized to introduce a terminal hydroxy or amine group, can thus be coupled to the SMA polymers through coupling with the maleic anhydride groups to form an ester, amide, or imide linkage as described previously for the ethylene/maleic anhydride backbone.

Branched polymers similar to those just described can be prepared by use of α,β-unsaturated anhydrides such as maleic anhydride as a difunctional polymerizable monomer for reaction with amine or hydroxy terminal polyolefin pre-arms. The amine or hydroxy groups reacts to provide new unsaturated polyolefin pre-arms with either an imide or an anhydride, ester bond. The unsaturation in the new pre-arm can be subjected to conventional free radical or anionic polymerization conditions either alone or with ethylene or styrene, to make copolymer backbones. Alternatively, other monomers copolymerizable with ethylene and/or styrene, for example acrylates and methacrylates, can be used to make a terpolymer backbone.

It is possible, and sometimes desirable to use, as the reactive polymeric backbone, partially hydrolyzed polymers of vinyl acetate. As is well known to those skilled in the art, vinyl acetate can be polymerized by means of a free radical polymerization mechanism to form polyvinyl acetate which can then be substantially or completely hydrolyzed using either acidic or basic conditions to remove acetyl groups pendant on the polymer backbone leaving pendant hydroxy groups. Typically, polyvinyl acetate can by hydrolyzed to the extent of 50 to 80 percent. Thus, the polymer employed as the polymer backbone contains 50 to 80 percent alcohol groups and 20 to 50 percent vinyl acetate groups. Such products are commercially available from a variety of sources.

In one variation, the vinyl acetate-vinyl alcohol polymer employed as the reactive polymeric backbone in the practice of the present invention can be converted by reaction with a C₁-C₄ aliphatic aldehyde or ketone to form the corresponding acetal of ketal, respectively. Such reactions and the polymers produced therefrom are well known to those skilled in the art and are commercially available from a variety of sources. Such polymers are referred to as poly(vinyl acetals) or poly(vinyl ketals) and generally contain the structure: 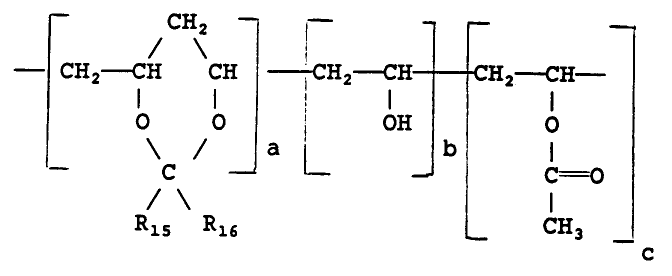 wherein R₁₅ and R₁₆ are each hydrogen or C₁-C₁₀ alkyl (e.g., methyl, ethyl, etc.). Commercially available poly(vinyl acetals) and poly(vinyl ketals) typically contain 75 to 95 percent by weight of the acetal (or ketal) (a), 6 to 25 percent by weight of vinyl alcohol (b) and 0 to 13 percent by weight of vinyl acetate (c). Those proportions are not critical and, as will be appreciated by those skilled in the art, proportions outside those ranges can likewise be employed. It is generally preferred that the polymer backbone used in this embodiment has a number average molecular weight Mₙ ranging from 1,000 to 40,000 g/mol.

The polyolefin pre-arm herein can be coupled to polyvinyl alcohol/vinyl acetate or to poly(vinyl acetals/ketals) in combination with either the vinyl alcohol group or the vinyl acetate group by means of a variety of techniques. For example, use can be made of a polyolefin pre-arm which has been functionalized to introduce a carboxylic acid group as described above or the acid chloride group. When the polyolefin pre-arm has been functionalized in that way, the carboxyl group is capable of reaction with either the hydroxy functionality of the vinyl alcohol by way of an esterification reaction or with an acetate group of vinyl acetate by way of a transesterification reaction in accordance with conventional techniques.

Alternatively, use can be made of a polyolefin pre-arm which has been functionalized to introduce an ester group, such as a simple aliphatic ester or, as is sometimes preferred, an ester containing an ester leaving group such as a tosylate group or mesylate group. Such ester groups are likewise capable of reaction with either the acetate functionality or the hydroxy functionality of the reactive polymeric backbone, again in accordance with well known techniques.

Another technique by which the polyolefin pre-arm can be coupled to the polyvinyl alcohol/acetate backbone is by a reaction sequence employing a hydroxy functional polyolefin pre-arm. The (terminal) hydroxy group of the polyolefin pre-arm is converted to a tosylate by reactions with tosylchloride to generate a (terminal) tosyl group on the polyolefin pre-arm. That has the capability of reacting directly with the hydroxy functionality of the polyvinyl alcohol/acetate in the backbone to form the corresponding ether linkage or to undergo a transesterification reaction with the acetate group to form the corresponding ester linkage.

As an alternative technique one can couple polyolefin pre-arm directly via a polymerization reaction by incorporation of difunctional polymerizable monomers in the form of vinyl isocyanates. Examples of such monomers are IEM and TMI as previously described. In accordance with this embodiment, the amine or hydroxy terminal polyolefin is directly reacted with the TMI or IEM via the isocyanate functionality to provide a new unsaturated polyolefin pre-arm with a urea, urethane bond. The unsaturation in this new pre-arm can be subjected to conventional free radical or anionic polymerization conditions either alone or in combination with other styrene-like or (meth)acrylate-like comonomers known to undergo such copolymerization reactions. Branched polymers as thus described can be exemplified by the following equation using styrene and methyl methacrylate as comonomers: 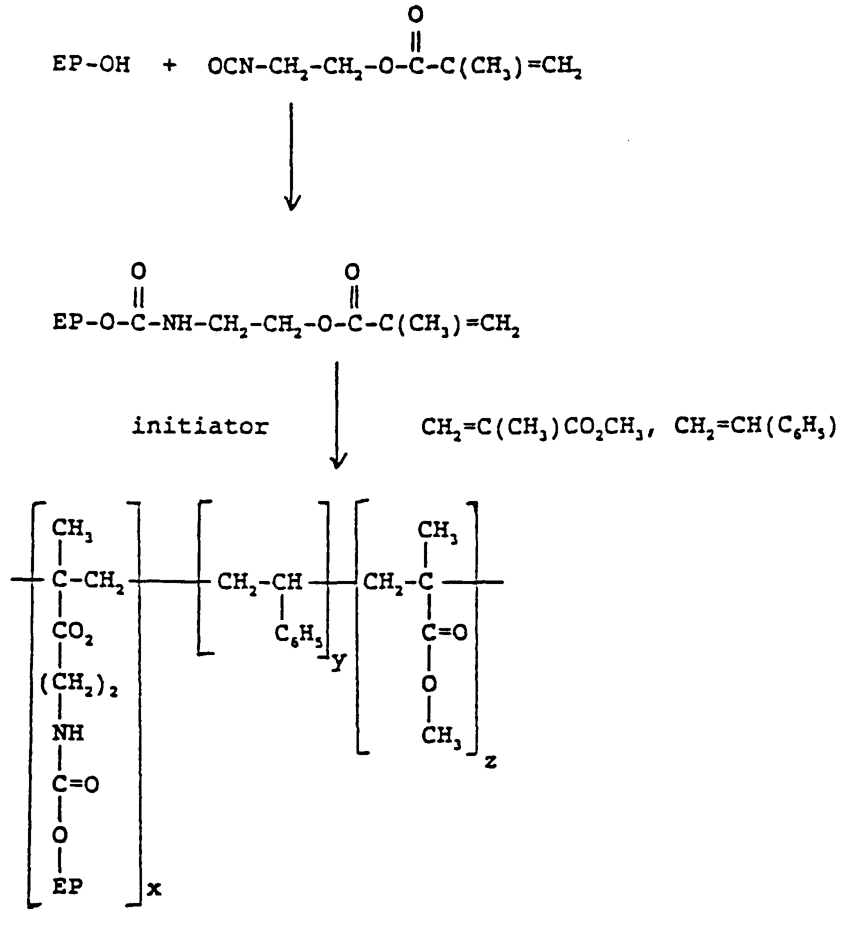 wherein x is 5 to 30 weight percent IEM derivatized polyolefin arm, y is 25 to 65 weight percent styrene and z is 30 to 70 weight percent methylmethacrylate.

The coupling reaction of the polyolefin pre-arm to the functionality of the reactive polymer backbone can be carried out in accordance with a variety of reaction conditions as described in the art. It is generally possible, and sometimes desirable, to carry out the reaction in the presence of a solvent such as aliphatic hydrocarbons (such as pentane, hexane, heptane, pentamethylheptane or distillation fractions); aromatic hydrocarbons (such as tetrachloroethylene) or ethers (such as tetrahydrofuran or dioxane). The relative properties of the pre-arm and the backbone are controlled to ensure that the desired number of polyolefin pre-arms become linked by the addition reaction to the polymeric backbone. The solution reaction is generally carried out at a concentration of 2 to 50 weight percent of polymeric reactant. The polymeric reactants are ratioed according to the moles of (terminal) unsaturation (C=C) in the polyolefin pre-arm to the moles of Si-H bonds in the polyhydrosilane. Because the coupling of polyolefin pre-arms to the reactive groups present in the backbone controls the number of arms linked to the backbone, a molar excess of polyolefin pre-arms ensures the maximum number of polyolefin arms linked to the polymer backbone, when maximum branching is desired. In general, mole ratios ranging from 1:100 to 10:1 of the polyolefin pre-arms relative to the reactive groups in the polymeric backbone are employed. The reaction temperature is not a critical variable, and depends somewhat on the reactants used in carrying out the coupling reaction. Generally, temperatures ranging from 15 to 300°C can be used for that purpose. Similarly, the reaction time is likewise not critical and depends on the reactants employed. As a general rule, reaction times are those sufficient to couple the polyolefin pre-arm to the polymer backbone, and generally range from 10 seconds up to 300 hours.

Branched polyolefins, once formed, are stable and can be modified by additional chemical reactions. One such reaction is functionalization by means of a free radical graft reaction or a graft polymerization reaction. Polyolefin grafted polymers are themselves well known to those skilled in the art. Similar chemical reactions can be used to graft the branched polyolefins of this invention. Suitable graft monomers include unsaturated dicarboxylic acid anhydrides and their corresponding acids, preferably those having the general formula: 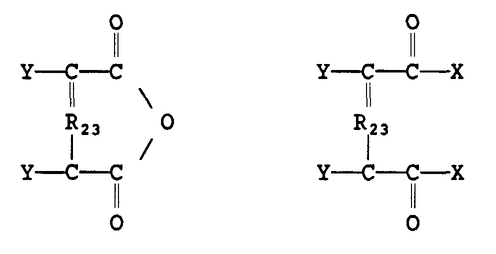 wherein R₂₃ is an alkyl group having 0 to 4 carbon atoms and Y is preferably hydrogen but may also be an organic group such as a branched or straight chain alkyl group, an anhydride, a ketone group, a heterocyclic group or other organic group containing 1 to 12 carbon atoms. In addition, Y can be a halogen such as chlorine, bromine or iodine. X can be OH or an alkoxy group wherein the alkyl group contains 1 to 8 carbon atoms. Preferred among those graft monomers are maleic anhydride, itaconic anhydride.

Also suitable as the graft monomer for functionalizing a branched polyolefin are the derivatives of olefinically unsaturated carboxylic monomers such as, acrylic or methacrylic acid, or their esters, graft monomers which are likewise known to those skilled in the art. Typically, acrylic and methacrylic acid derivative contain 4 to 16 carbon atoms. Preferred among the acrylic and methacrylic acid graft monomers are those having the structure: 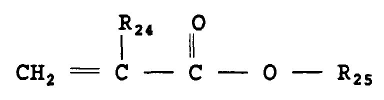 wherein R₂₄ is hydrogen or C₁ to C₄ alkyl (e.g., methyl, ethyl, etc.) and R₂₅ is selected from the group consisting of a C₁ to C₈ alkyl group, a keto functional alkyl group, an epoxy functional alkyl group, -NH₂ or -NR'₂ where R' can be H or C₁ to C₈ hydrocarbon and both R' groups need not be the same. Particularly preferred among the group of acrylic or methacrylic graft monomers are glycidyl methacrylate, methylacrylate, methylmethacrylate, ethylmethacrylate and aminopropylmethacrylate, and acrylamide.

Another group of graft monomers which can be used to functionalize a branched polyolefin are vinyl amines containing 2 to 25 carbon atoms, and preferably heterocyclic vinyl amines. Such amines are themselves known as functionalizing graft monomers and include allyl amines, N-vinyl pyridines, N-vinyl pyrrolidones, vinyl lactams, vinyl carbazoles, vinyl imidazoles and vinyl thiazoles as represented by 2-vinyl pyridine, N-vinyl pyrrolidone, vinyl caprolactam, 1-vinyl imidazole, allyl amine, 4-methyl-5-vinyl thiazole and 9-vinyl carbazole. Such graft monomers are described in detail in U.S. Patent No. 4,340,689, the disclosure of which is incorporated herein by reference.

As it will be appreciated by those skilled in the art, other vinyl monomers described in the prior art as suitable for functionalizing such a branched polyolefin may likewise be used in the practice of the present invention. Examples of such further vinyl compounds are the vinyl silanes and vinylbenzyl halides as represented by vinyltrimethoxysilane, vinyldiethychlorosilane, vinylbenzylchloride and the like. Further descriptions of suitable silane graft monomers are described in U.S. Patent No. 4,340,689, the disclosure of which is incorporated herein by reference.

The branched olefin polymer can be used as such or as a mixture with other (olefin) polymers for the production of a coating. Also multilayer coatings can be formed in which at least one of the coating layers comprises the branched olefin polymer. The above described branched olefin polymers are used for coating of a substrate. Examples of suitable substrates are substrates in the form of for instance plates, sheets, films, woven or non-woven textile fabrics, threads, wires, cables, fibres, whiskers, flakes or a powder. The material from which the substrate is made can be for instance paper, metal such as steel and aluminium, various plastics, glass, carbon or cotton.

The branched polyolefins can be applied as a coating in a melted form or as a solvent or a dispersion in a liquid. Liquids which are able to dissolve or disperse the branched olefin polymer are aromatic and aliphatic liquids. Examples of suitable liquids are toluene, xylene and gasoline.

As coating methods can for example be used calandering, extrusion coating, lamination and casting. Also coating a substate by precipitation of the branched polyolefin out of a solvent or a dispersion is possible. These methods are known to the person skilled in the art. Processing is governed by the properties of the substrate and the coating material. When the substrate is a small material, coating by precipitation of the branched polyolefin on the substrate is the most suitable way. For bigger substates one of the other processing methods can be used.

The viscosity of the coating material must be such that the material flows on the substrate surface. In calendering or extrusion the coating material is fluidized by pressure and heat. During casting the viscosity of the branched polyolefin is reduced by solving or dispersing the branched polyolefin in a liquid. The advantage of calendering, extrusion coating and lamination is that these methods require no solvents.

When the branched olefin polymers are used for extrusion coating the branched olefin polymer preferably has a melt flow index (MFI) (I₂) of 4-20 dg/min; more preferably of 6-10 dg/min. The MFI is determined according to ISO 1133 at a temperature of 190°C or 230°C (dependent on the melting point of the branched olefin polymer) and at a pressure of 21,2 N/m². The temperature for determining the MFI depends on the composition of the polyolefin pre-arms. For instance, for branched olefin polymers wherein the polyolefin pre-arm is formed of a polyethylene the MFI is determined at 190°C and for branched olefin polymers wherein the polyolefin pre-arm is formed of a polypropylene the MFI is determined at 230°C. Where the branched olefin polymers generally contain a low amount of low volatile by-products, they can be processed without smoke and smell. Because of the low amount of low volatile by-products the coated products comprising the branched polyolefins have good organoleptic properties and can be used for coating of for instance a paper or aluminium substrate that will be used as a food package. The organoleptic properties of a product are determined by smell- and taste tests of the food that was stored in the package.

## Claims

1. Use of an olefin polymer for coating, characterized in that the olefin polymer is a branched polyolefin in the form of a comb and structural equivalents thereof comprising a plurality of polyolefin arms linked to a polymer backbone, said backbone having repeating units containing a group selected from the group consisting of aliphatic groups, aromatic groups, heteroatom-containing groups and combinations thereof, wherein the branched polyolefin is prepared:
(a) by coupling a polyolefin pre-arm with a reactive polymeric backbone; or
(b) by polymerization of a polyolefin pre-arm.

2. Use according to claim 1, characterized in that the branched polyolefin has a melt flow index (I₂) of 4-20 dg/min.

3. Use according to any one of claims 1-2, characterized in that the branched polyolefin has a melt flow index (I₂) of 6-10 dg/min.

4. Use according to any one of claims 1-3, characterised in that the polymer backbone of the branched polyolefin is a polyhydrosilane polymer.

5. Use according to claim 4, wherein the polyhydrosilane polymer is a silicon-containing polymer having repeating units of the general formula: 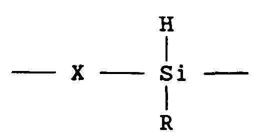 wherein X is a heteroatom containing group or one or more carbon atoms forming part of a group selected from aliphatic groups and aromatic groups and R is hydrogen or an organic group.

6. Use according to any one of claims 1-3, characterised in that the polymer backbone of the branched polyolefin is a polyhydrosiloxane having the general formula: 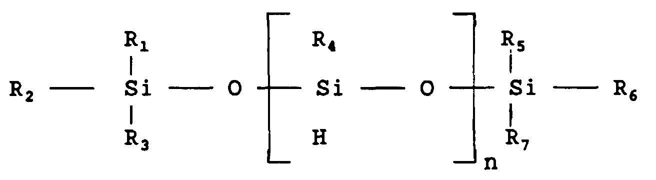 wherein R₁ to R₇ is each independently hydrogen or an organic group and n is an integer of at least about 10.

7. Coated product comprising a substrate and a coating of an olefin polymer characterized in that the coating comprises a branched polyolefin in the form of a comb and structural equivalents thereof comprising a plurality of polyolefin arms linked to a polymer backbone, said backbone having repeating units containing a group selected from the group consisting of aliphatic groups, aromatic groups, heteroatom-conataining groups and combinations thereof, wherein the branched polyolefin is prepared:
(a) by coupling a polyolefin pre-arm with a reactive polymeric backbone; or
(b) by polymerization of a polyolefin pre-arm.

8. Coated product according to claim 7, characterised in that the polymer backbone of the branched polyolefin is a polyhydrosilane polymer.

9. Coated product according to claim 8, wherein the polyhydrosilane polymer is a silicon-containing polymer having repeating units of the general formula: 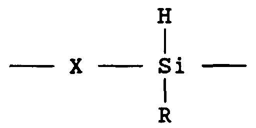 wherein X is a heteroatom containing group or one or more carbon atoms forming part of a group selected from aliphatic groups and aromatic groups and R is hydrogen or an organic group.

10. Coated product according to claim 7, characterised in that the polymer backbone of the branched polyolefin is a polyhydrosiloxane having the general formula: 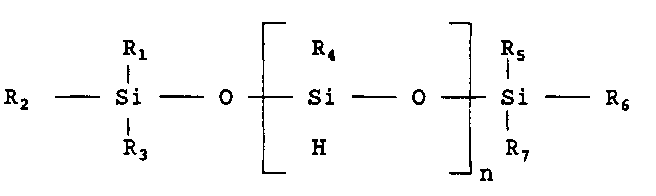 wherein R₁ to R₇ is each independently hydrogen or an organic group and n is an integer of at least about 10.
